# EUROPÄISCHE PATENTSCHRIFT

(11) **EP 1 144 882 B1**
(45) Veröffentlichungstag und Bekanntmachung des Hinweises auf die Patenterteilung: **16.07.2008**
(21) Anmeldenummer: 99957835.4
(22) Anmeldetag: 21.12.1999
(51) Int. Cl.: F16C 29/08

(54) **LINEARBEWEGUNGSFÜHRUNG**
LINEAR DISPLACEMENT GUIDE
SYSTEME DE GUIDAGE DE DEPLACEMENT LINEAIRE

(30) Priorität: 28.12.1998 CH 257798
(43) Veröffentlichungstag der Anmeldung: 17.10.2001
(73) Patentinhaber: Schneeberger Holding AG, 4914 Roggwil (CH)
(72) Erfinder: MISCHLER, Ernst, CH-4919 Roggwil (CH); ROTZETTER, Heinz, CH-4912 Aarwangen (CH)
(74) Vertreter: EGLI-EUROPEAN PATENT ATTORNEYS
(86) Internationale Anmeldenummer: PCT/CH1999/000613
(87) Internationale Veröffentlichungsnummer: WO 2000/039472

(56) Entgegenhaltungen:
- EP-A- 0 731 283
- DE-A- 19 524 810
- DE-A- 19 615 075
- DE-C- 4 311 641

## Beschreibung

Die Erfindung betrifft eine Linearbewegungsführung gemäss dem Oberbegriff des Anspruchs 1.

Derartige Linearbewegungsführungen werden zur geradlinigen Führung von Maschinenteilen eingesetzt, wie dies beispielsweise bei der Bewegung der translatorischen Achsen einer Werkzeugmaschine erforderlich ist. Obwohl die Linearführungen oftmals in einer stark verschmutzten Umgebung und bei ungünstigen Bedingungen, wie beispielsweise hohen Temperaturen, eingesetzt werden, wird von ihnen eine hohe Präzision gefordert. Eine wesentliche Voraussetzung hierfür ist, dass die Wälzelemente nicht verschmutzen, da dies auf den Verschleiss und die Führungsgenauigkeit einen nachteiligen Einfluss hat.

Unter anderem aus diesem Grund werden oftmals an den Stirnseiten der Schlitten Dichtungen angebracht. Diese Dichtungen gleiten an der Oberfläche und den Seitenflächen der Schiene entlang und streifen dadurch den Schmutz auf der Schiene ab, wodurch ein Eindringen von Schmutz in das Schlitteninnere verhindert werden soll.

Die Führungsschienen sind zur Befestigung an einem Träger meistens mit orthogonal zu ihrer Oberfläche verlaufenden Durchgangsbohrungen versehen, die zur Aufnahme von Befestigungselementen, wie beispielsweise Schrauben, vorgesehen sind. Da die Befestigungselemente die Durchgangsbohrungen in der Regel nicht vollständig ausfüllen, setzt sich hier oftmals Schmutz fest, der trotz der Dichtungslippen häufig in das Innere des Schlittens gelangt. Ausserdem bilden sich durch die Bohrungen an der Oberfläche Kanten aus. Werden die Dichtlippen direkt über die Kanten geführt, so kann dies zu einem zusätzlichen Verschleiss der Dichtlippen führen. Zudem sammelt sich an den Kanten leicht Schmutz und Staub an, der auch durch die Dichtlippen nicht zuverlässig abgestreift werden kann und die Dichtlippen eventuell sogar beschädigt.

Um eine derartige Verschmutzung zu vermeiden, sind bereits vielfältige Abdeckungen für die Durchgangsbohrungen bekannt geworden.

So ist es beispielsweise bekannt, in die Durchgangsbohrungen Kunststoffkappen einzudrücken, die mit der Oberfläche der Führungsschiene fluchten. Eine andere Art der Abdeckung ist aus der DE-A 38 12 505 bekannt, bei der die Führungsschiene an ihrer Oberfläche eine Längsnut aufweist, in die eine streifenförmige Platte eingesetzt ist.

In der DE 43 11 641 C1 wird ein Abdeckband vorgeschlagen, das zwei Schenkel aufweist, die mit dem Mittelabschnitt jeweils einen Abknickwinkel von vorzugsweise 70° einschliessen. Die beiden Schenkel sind zum Eingriff in Hinterschneidungen an Seitenflächen der Führungsschiene vorgesehen. Da die Hinterschneidungswinkel der Schiene grösser sind als die Abknickwinkel, soll ein federnder Andruck des Abdeckbandes an der Schiene bewirkt werden. Bei dieser Linearbewegungsführung kann als nachteilig angesehen werden, dass an die Fertigungsgenauigkeit des Abdeckbandes relativ hohe Anforderungen gestellt werden. Ein zu geringer Abknickwinkel führt dazu, dass das Abdeckband auf der Schiene nicht sicher fixiert ist. Bei zu grossen Abknickwinkeln besteht die Gefahr, dass sich das Band auf der Schiene gar nicht mehr oder nur sehr umständlich montieren lässt.

Die DE 195 24 810 A1 zeigt ein gattungsgemässes zweischichtiges Abdeckband zum Einsatz in eine Längsnut einer Führungsschiene. Hierbei greift eine untere Schicht des Abdeckbandes in die Nut ein, um mit seitlichen Halteleisten an Rändern der Nut klemmend anzuliegen. Die obere Schicht des Abdeckbandes liegt mit über die Nut hinausragenden Kantenbereichen an Anlageflächen von durch Schleifen an der Oberseite der Schiene gebildeten Randausnehmungen an und soll hier mit der Oberseite der Schiene bündig abschließen, um eine insgesamt ebene Oberseite zu bilden. Auch diese Lösung stellt hohe Anforderungen an die Fertigungsgenauigkeit der Linearbewegungsführung, insbesondere damit der obere Teil des Abdeckbandes genau in die Nut eingepaßt werden kann.

Der Erfindung liegt deshalb die Aufgabe zugrunde, für eine Linearbewegungsführung eine Abdeckung der zur Befestigung der Schiene vorgesehenen Öffnungen zu schaffen, die gegenüber Fertigungstoleranzen unkritisch ist und trotzdem eine sichere Abdeckung gewährleistet. Ausserdem ist die Herstellung der Schiene zu vereinfachen und das Abfliessen von auftreffenden Flüssigkeiten zu verbessern.

Diese Aufgabe wird bei einer Linearbewegungsführung der eingangs erwähnten Art durch die Merkmale von Anspruch 1 gelöst.

Erfindungsgemäss sind zumindest Abschnitte, vorzugsweise jedoch die auf beiden Seiten der Nut vorhandenen Teilflächen der Oberseite der Schiene insgesamt, jeweils zu den ihnen benachbarten Seitenflächen der Schiene hin geneigt. Dadurch lässt sich die Schiene mit wenigeren Arbeitsschritten, insbesondere wenigeren Schleifbearbeitungsschritten, als bisher herstellen, da jeweils eine Seitenfläche und eine Teilfläche der Schiene in einem Arbeitsgang gleichzeitig bearbeitet werden kann. Ausserdem fliesst aufgrund der sich daraus ergebenden Form der Schiene eine auf der Schiene auftreffende Flüssigkeit, beispielsweise Kühlwasser, besonders gut ab. Eine solche Schiene sollte vorzugsweise mit einem Abdeckband versehen sein, das Schenkel aufweist, die gegenüber dem Mittelabschnitt des Abdeckbandes abgewinkelt sind. Die Schenkel können flächig gegen die Teilflächen der Oberseite der Schiene anliegen.

In einer weiteren bevorzugten Ausführungsform der erfindungsgemässen Linearbewegungsführung liegt das Abdeckband auf den sich jeweils seitlich an die Nut anschliessenden Teilflächen der Oberseite der Schiene auf. Durch Variation der Grösse der Überdeckung der Teilflächen von dem Abdeckband können Fertigungstoleranzen der Nut und/oder des Abdeckbandes ausgeglichen werden, wodurch die erfindungsgemässe Linearführung gegenüber Toleranzen weniger kritisch ist.

Bei erfindungsgemässen Linearbewegungsführungen sollte das die Nut vollständig überdeckende Abdeckband durch eine "Schnapppassung" zwischen Wandflächen der Nut der Führungsschiene einerseits und den Klemmschenkeln des Abdeckbandes andererseits in der Nut befestigt werden. Besonders günstig ist es, wenn die Schnapppassung bewirkt, dass zumindest eine geringfügige elastische Verformung des Mittelabschnittes in Form von einer Krümmung erfolgt. Die Krümmung ist vorzugsweise konvex, d.h. sie ist von der Nut weggerichtet. Des weiteren kann es zweckmässig sein, dass die Länge des biegefähigen Mittelabschnittes ein vielfaches der Länge eines Klemmschenkels beträgt. Grössere Fertigungstoleranzen der Nut oder des Abdeckbandes können dann zu unterschiedlich grossen elastischen Verformungen des Mittelabschnittes führen. Da jedoch aufgrund der geometrischen Verhältnisse selbst grössere Toleranzen nur zu einem relativ geringen zusätzlichen Hub bzw. Auslenkung führen, ist die Funktion der Linearführung nicht beeinträchtigt.

In einer bevorzugten Ausführungsform kann vorgesehen sein, dass das Abdeckband zweiteilig ausgebildet ist und sich aus zumindest zwei Blechstreifen zusammensetzt. Die beiden Streifen können zwei Blechstreifen sein, die durch geeignete Verbindungstechniken, wie beispielsweise Kleben, Löten oder Schweissen, miteinander verbunden sind. Ein Abdeckstreifen ist vorzugsweise über einem Befestigungsstreifen angeordnet und liegt auf einer Oberseite der Schiene auf. An dem gegenüber dem Abdeckstreifen schmäleren Befestigungsstreifen sind die Klemmschenkel vorgesehen.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine teilweise geschnittene Querschnittsdarstellung einer auf einem Träger montierten Linearbewegungsführung im Bereich einer Durchgangsbohrung;
- Fig. 2: eine vergrösserte Teilansicht eines ersten Abdeckbandes, das auf der Führungsschiene aus Fig. 1 befestigt ist;
- Fig. 3: ein weiteres Abdeckband in einer Darstellung gemäss Fig. 2;
- Fig. 4: ein weiteres Abdeckband in einer Darstellung gemäss Fig. 2;
- Fig. 5: ein weiteres Abdeckband in einer Darstellung gemäss Fig. 2;
- Fig. 6: ein auf einer Führungsschiene befestigtes einteiliges Abdeckband in einer Querschnittsdarstellung.
- Fig. 7: eine Führungsschiene und ein Abdeckband einer erfindungsgemässen Linearführung in einer Querschnittsdarstellung;
- Fig. 8: einen Ausschnitt X aus Fig. 7.

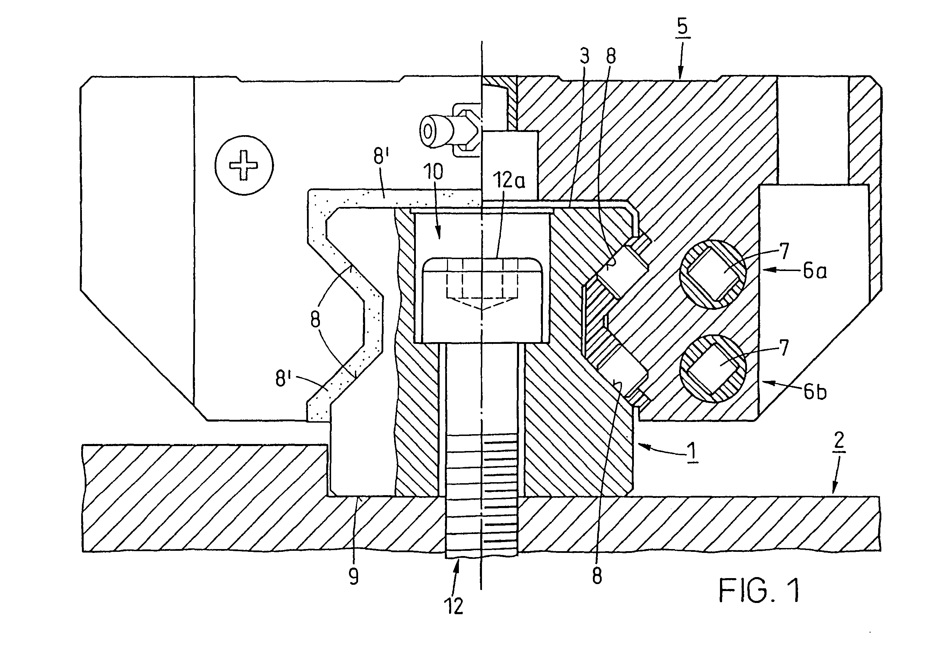

In Fig. 1 ist eine Linearbewegungsführung gezeigt, bei der eine teilweise geschnitten dargestellte profilierte Führungsschiene 1 auf einem Träger 2 befestigt ist. Auf einer sich parallel zur Längsbewegungssrichtung, d.h. senkrecht zur Zeichenebene, erstreckenden Oberfläche 3 der Führungsschiene 1 ist die Montage eines Abdeckbandes 4 vorgesehen, das in Fig. 1 allerdings nicht dargestellt ist. Desweiteren ist gezeigt, dass sich ein im Querschnitt im wesentlichen U-förmiger Schlitten 5 auf der Führungsschiene 1 abstützt, so dass dieser entlang der Führungsschiene 1 bewegbar ist.

Der Schlitten stützt sich über Wälzlagerelemente 7, die in vier - jeweils in sich geschlossenen Umläufen 6a, 6b angeordnet sind - auf seitlichen geneigten Tragflächen 8 der Führungsschiene 1 ab. In der teilweise geschnittenen Darstellung von Fig. 1 sind jedoch nur die Umläufe in einem der beiden Schenkel gezeigt. An den beiden Stirnseiten des Schlittens 5 ist entlang der Kontur der U-förmigen Ausnehmung jeweils eine Dichtlippe 8 angeordnet, die an der Führungsschiene 1 und dem Abdeckband 4 anliegt. Dies trägt dazu bei, ein Eindringen von Schmutz in die Umläufe 6a, 6b zu verhindern.

Fig. 1 zeigt zudem eine, von zumindest zwei, sich von der Oberfläche 3 bis zu einer Standfläche 9 erstreckende abgestufte Durchgangsbohrung 10 der Führungsschiene 1. In dieser ist eine Schraube 12 mit ihrem Schraubenkopf 12a in der Führungsschiene 1 vollständig versenkt angeordnet. Die Führungsschiene 1 ist mit der als Befestigungsmittel dienenden Schraube 12 auf dem Träger 2 fixiert.

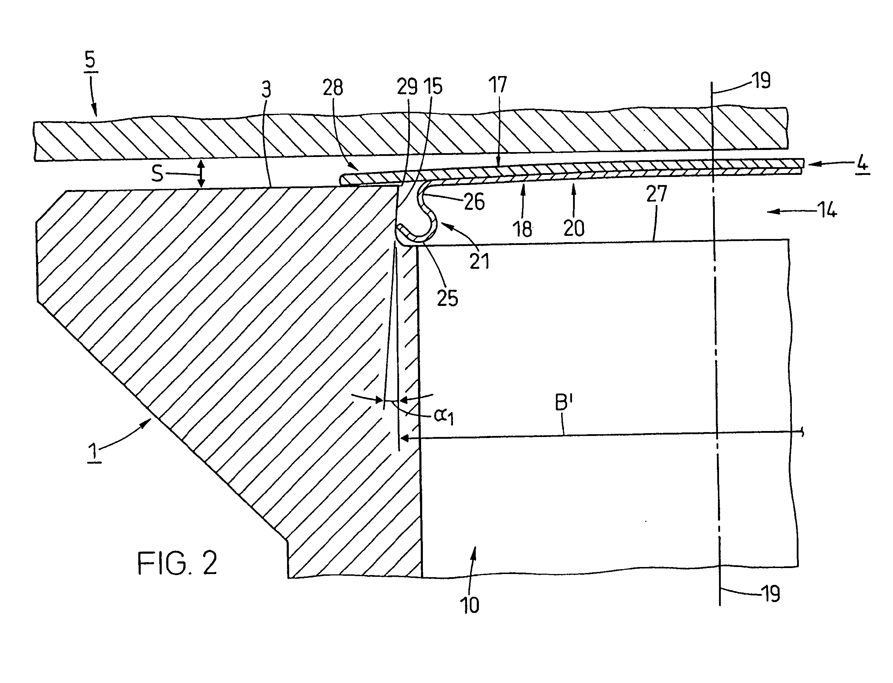

Fig. 2 zeigt die Führungsschiene 1 und ein erstes Abdeckband 4 in einer gegenüber Fig. 1 vergrösserten Darstellung. Wie in Fig. 2 zu erkennen ist, weist die mit einem schwalbenschwanzförmigen Querschnitt versehene Nut 14 im dargestellten Ausführungsbeispiel eine geringfügig grössere Breite auf als die Durchgangsbohrung 10. Zwei Seitenwände 15 der Nut 14 schliessen mit einer Vertikalen einen Neigungswinkel (α₁) ein, so dass sich an den Seitenflächen 15 jeweils eine Hinterschneidung ausbildet. Der Neigungswinkel (α₁) kann beispielsweise 4° betragen.

Die in Fig. 2 gezeigte erste Ausführungsform des Abdeckbandes 4 weist einen oberen Abdeckstreifen 17 und einen darunter angeordneten Befestigungsstreifen 18 auf. Die beiden Streifen 17, 18 sind durch Löten, Kleben oder Schweissen fest miteinander verbunden, so dass das Abdeckband bezüglich einer parallel zur Längsbewegungsrichtung des Schlittens verlaufenden Symmetrieebene 19 spiegelsymmetrisch ist. Beide Streifen 17, 18 bestehen aus federelastischem, vorzugsweise aus dem gleichen, Bandmaterial das aus einem Dickenbereich von 0,2 mm bis 0,6 mm gewählt sein kann. Der Abdeckstreifen 17 kann zweckmässigerweise etwas dicker als der Befestigungsstreifen 18 ausgeführt sein, beispielsweise in einem Bereich von 0,05 mm bis 0,3 mm. Dadurch kann erreicht werden, dass sich in montiertem Zustand beide Streifen elastisch verformen, der Befestigungsstreifen 18 jedoch eine stärkere Deformation als der Abdeckstreifen erfährt. Hierdurch lassen sich relativ hohe Feder- bzw. Haltekräfte aufbauen. Trotz der in Richtung auf den Schlitten 5 erfolgenden Biegung des Mittelabschnittes 20 des Abdeckbandes wird die Funktionssicherheit der Linearbewegungsführung durch die Krümmung des Abdeckbandes nicht beeinträchtigt. Die Biegelinie des Abdeckbandes verläuft nämlich in einem Spalt S zwischen der Oberseite 3 der Schiene und dem Schlitten 5, ohne den letztgenannten zu berühren.

Der Abdeckstreifen 17 ist (im unbelasteten Zustand) ein im wesentlichen ebener Blechstreifen, dessen Breite grösser ist als eine Breite B' der Nut 14. Dadurch liegt das Abdeckband im Bereich von seinen beiden in Längsbewegungsrichtung verlaufenden seitlichen Kanten auf einer Oberseite der Führungsschiene 1 auf. Damit der Verschleiss der Dichtungslippen bzw. Abstreifer des Wagens möglichst gering ist, können die Seitenkanten des Abdeckstreifens abgerundet sein.

Der durch Blechumformung hergestellte Befestigungsstreifen 18 hat einen Mittelabschnitt 20, an den sich beidseitig jeweils ein abgekanteter Klemmschenkel 21 anschliesst. Der Mittelabschnitt 20 hat eine Breite, die geringfügig kleiner ist als die Breite B' der Nut. Der in der Darstellung von Fig. 2 gezeigte Klemmschenkel 21 ist im wesentlichen S-förmig gestaltet, während der andere Klemmschenkel einen dazu spiegelbildlichen Querschnitt aufweist. Das freie Ende des jeweiligen Klemmschenkels ist somit mit einem Bogen, insbesondere einem Kreisbogen 25, versehen. Im dargestellten Ausführungsbeispiel erstreckt sich dieser Kreisbogen 25 über etwa 180°. Zwischen diesem Kreisbogen und dem Mittelabschnitt 20 ist ein weiterer Kreisbogen 26 des Klemmschenkels 21 ausgebildet, der sich über etwa 140° erstreckt und dessen Krümmung zum gegenüberliegenden Klemmschenkel zeigt.

Im (nicht gezeigten) unbelasteten Zustand ist eine Gesamtbreite des Befestigungsstreifens 18 zumindest geringfügig grösser als eine grösste Breite B' der Nut 14, die im Bereich eines Nutgrundes 27 vorhanden ist.

Bei einer von mehreren möglichen Montageabläufen kann zunächst einer der beiden Klemmschenkel 21 des Abdeckbandes 4 über seine gesamte Länge (d.h. in Längsbewegungsrichtung gesehen, die vertikal zur Zeichenebene von Fig. 2 verläuft) gegen eine der Seitenwände 15 der Nut 14 in Anlage gebracht werden. Hierdurch liegt der Abdeckstreifen 4 mit einem Kantenbereich 28 auf der Oberseite 3 der Führungsschiene auf. Anschliessend wird der andere Klemmschenkel ebenfalls in die Nut 14 hineingedrückt. Da die Gesamtbreite des Befestigungstreifens 18 grösser ist als die Breite der Nut 14, muss hierzu der Klemmschenkel 21 elastisch verformt werden. Aufgrund der beschriebenen Querschnittsform der Klemmschenkel 21 geschieht dies vor allem im Bereich des Überganges zwischen Mittelabschnitt 20 und dem Klemmschenkel 21 sowie im Übergangsbereich der beiden kreisbogenförmigen Krümmungen. Da der Druck auch auf den anderen Klemmschenkel wirkt, beginnt auch dieser sich in entsprechender Weise zu verformen. Sobald das freie Ende des noch einzufügenden Klemmschenkels eine Kante 29 zwischen der Oberseite 3 und der Seitenwand 15 überwunden hat, beginnen sich die beiden Klemmschenkel wieder leicht zu entspannen.

In einer weiteren möglichen Montage des Abdeckbandes 4 wird dieses von einer Stirnseite der Schiene in die Nut eingeschoben. Falls die Federkräfte der Schenkel hierzu zu gross sind, kann durch alternierendes Andrücken des Bandes an die linke und rechte Seitenwand der Nut abwechselnd einer der beiden Schenkel entlastet werden , wodurch ein Vorschub möglich wird.

Das Abdeckband 4 ist auf der Führungsschiene 1 montiert, sobald beide Kantenbereiche 28 über im wesentlichen die gesamte Länge der Schiene ausserhalb der Nut auf der Oberseite 3 aufliegen. In dieser Endlage können sowohl der Abdeckstreifen 17 als auch Mittelabschnitt 20 eine Kontur mit einer geringen Krümmung aufweisen, wie dies in Fig. 2 zu erkennen ist. Diese Krümmung entsteht aufgrund der elastischen Verformung der Klemmschenkel 21. Toleranzen der Masse der Nut und des Abdeckbandes führen vor allem zu einer Variation der Grösse der Krümmung des Mittelabschnittes und damit auch des Abdeckstreifens. Da jedoch selbst grössere Toleranzen zu nur verhältnismässig geringen Zu- bzw. Abnahmen der Grösse der konvexen Krümmung führen, können derartige Toleranzen hingenommen werden. Die einwandfreie Führung des Wagens auf der Führungsschiene ist davon ebensowenig beeinträchtigt wie die Funktion des Abstreifers.

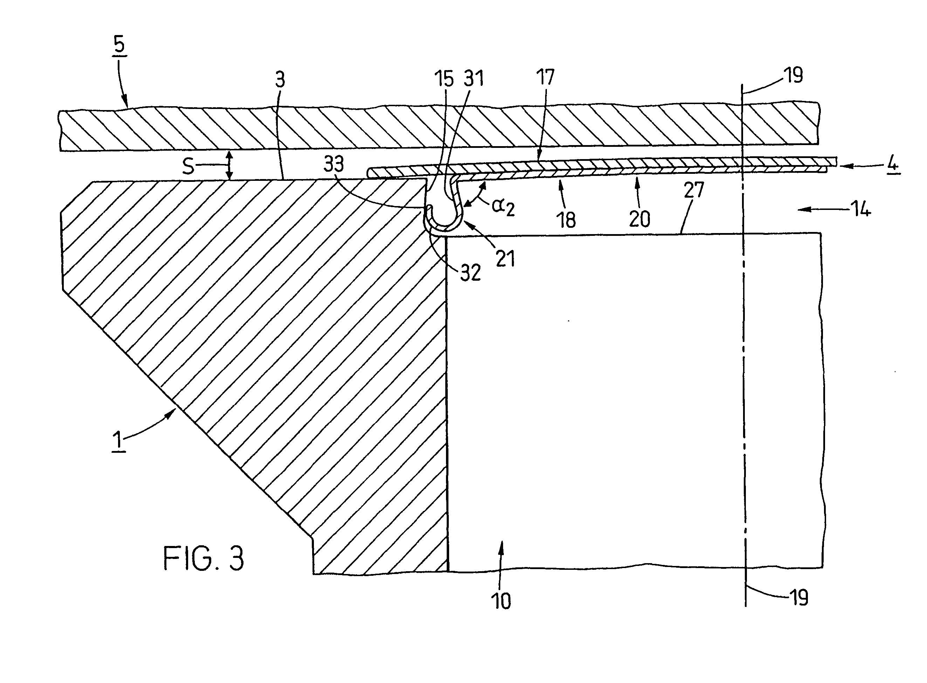

In Fig. 3 ist nun ein weiteres Ausführungsbeispiel einer Linearführung gezeigt. Die sonst mit der Ausführungsform von Fig. 2 identische Linearführung unterscheidet sich von dieser im wesentlichen durch eine andere Querschnittsform der Klemmschenkel 15. Diese weisen einen sich an den Mittelabschnitt 20 anschliessenden im wesentlichen ebenen Abschnitt 31 auf. Das freie Ende des jeweiligen Klemmschenkels 21 wird wieder durch einen Endabschnitt 32 gebildet, der einen Kreisbogen beinhaltet, so dass eine Seitenkante 33 des Befestigungstreifens an der Seitenwand 15 der Nut anliegt und zur Oberseite der Führungsschiene 1 zeigt. Wie in Fig. 3 gezeigt ist, schliesst im montierten Zustand der ebene Abschnitt 31 des Klemmschenkels 21 mit dem Mittelabschnitt 20 einen spitzen Winkel (α₂) ein, beispielsweise 85°. Ebenso wie bei dem zuvor erörterten Ausführungsbeispiel wirken Haltekräfte gegen die Seitenwände 15 der Nut. Durch eine entsprechende Wahl der Materialien des Befestigungsstreifens 18 und der Führungsschiene 1 sowie des Hinterschneidungswinkels (α₁) kann eine Selbsthemmung erreicht werden.

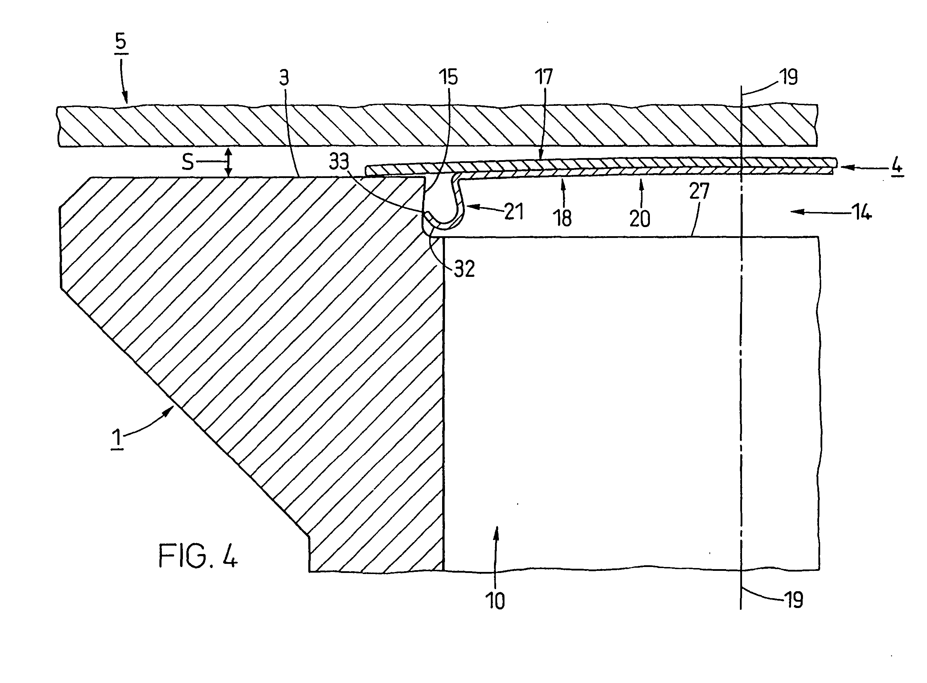

Fig. 4 zeigt eine weitere Linearbewegungsführung, die mit einer Führungsschiene 1 versehen ist. Diese Linearbewegungsführung unterscheidet sich von der in Fig. 3 gezeigten Ausführungsform im wesentlichen nur dadurch, dass sich beim Endabschnitt 32 des jeweiligen Klemmschenkels 21 nach dem Kreisbogen ein weiterer geradlinig verlaufender Abschnitt anschliesst, an dem sich die Seitenkante 33 des Befestigungsstreifens befindet. Dadurch liegt eine Seitenkante 33 des Befestigungstreifens an der Seitenwand 15 der Nut an und zeigt schräg nach oben zur Oberseite 3.

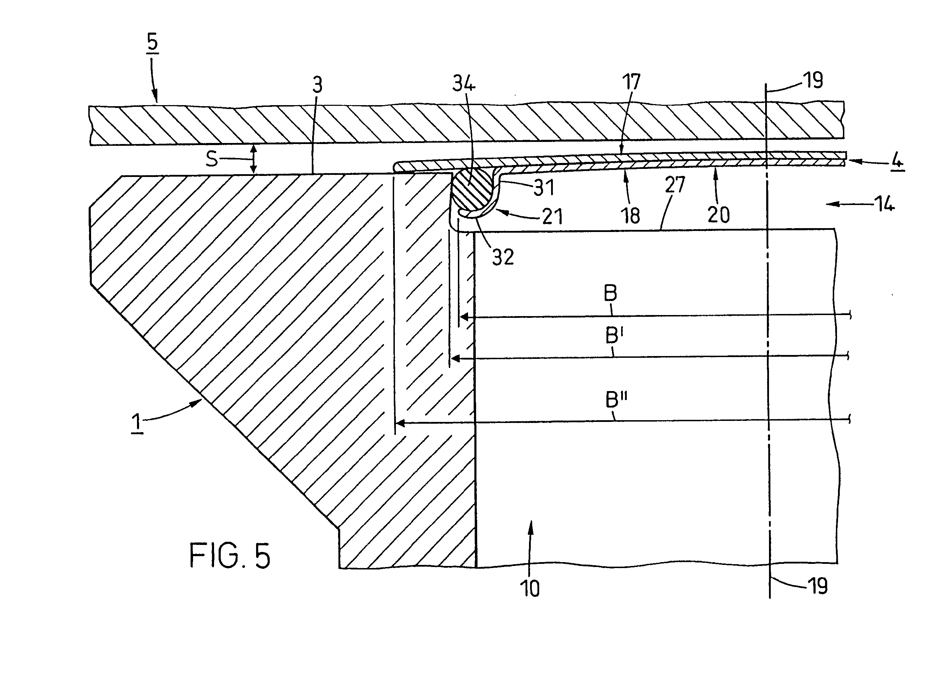

Fig. 5 zeigt eine Ausführungsform, bei der eine Gesamtbreite B des Befestigungsstreifens 18 kleiner ist als eine Breite B' der Nut 14. Eine Gesamtbreite B" des Abdeckbandes ist hingegen wiederum grösser als die Breite B' der Nut. Zudem ist hier der kreisbogenförmige Endabschnitt 32 des Klemmschenkels 21 mit einem gegenüber den bisher erörterten Ausführungsformen kleineren Kreisbogen ausgeführt, beispielsweise einem Kreisbogen von etwa 100°. Zur Erzeugung von Klemmkräften ist hier in den Kreisbogen jedes Klemmschenkels 21 eine im Querschnitt im wesentlichen kreisförmige und elastisch verformbare Gummidichtung 34 eingelegt. Die sich aus dem Befestigungsstreifen 18 und den beiden Gummidichtungen 34 ergebende Gesamtbreite ist grösser als die Breite der Nut 14. Die Klemmkräfte entstehen somit zu einem erheblichen Teil durch die Verformung der Gummidichtungen 34. Letztgenannte ergeben den zusätzlichen Vorteil, dass zwischen den Befestigungsstreifen 18 und dem Nutgrund 27 keine Flüssigkeit eindringen kann.

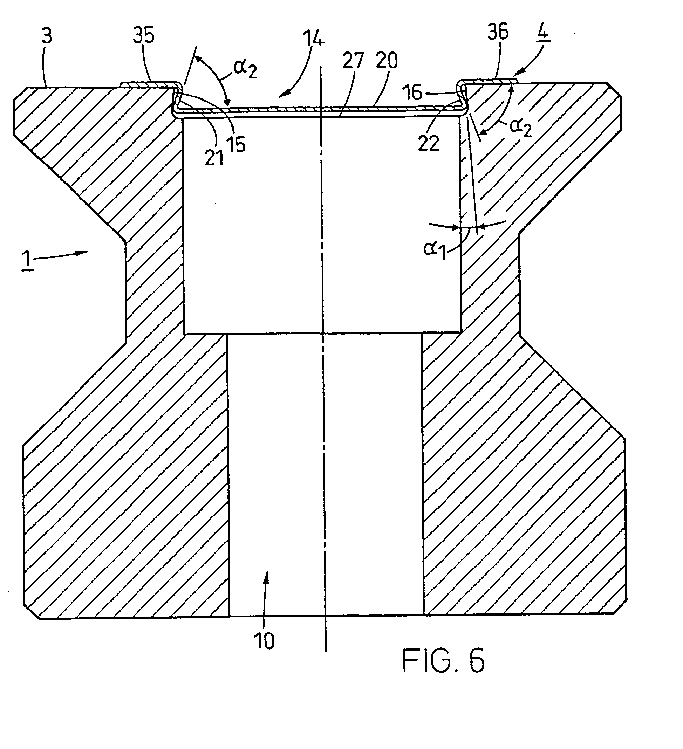

Im Unterschied zu den zuvor gezeigten Ausführungsformen ist die in Fig. 6 gezeigte Ausführungsform des Abdeckbandes 4 aus einem einzigen Blechstreifen einteilig ausgebildet. Dieser Blechstreifen übernimmt sowohl die Funktion des Befestigungs- als auch des Abdeckstreifens. Das Abdeckband weist einen in der Nut 14 angeordneten Mittelabschnitt 20 auf, an den sich zwei in Richtung zur Oberseite 3 weisende Klemmschenkel 21, 22 anschliessen. Der Mittelabschnitt 20 schliesst mit jedem der Klemmschenkel 21, 22 einen spitzen Abknickwinkel α₂ aus einem Bereich von ca. 82° bis ca. 85° ein. Der Mittelabschnitt sollte geringfügig breiter sein als die Breite des Nutgrundes. An die Klemmschenkel 21, 22 schliesst sich jeweils ein Abdeckschenkel 35, 36 an, der ausserhalb der Nut 14 auf der Oberseite 3 anliegt und diese teilweise bedeckt.

Da der Abknickwinkel α₂ kleiner ist als der von den Seitenwänden 15, 16 mit dem Nutgrund 27 eingeschlossene Winkel, liegen die Klemmschenkel 21, 22 nur jeweils mit dem Übergangsbereich vom Mittelabschnitt 20 zu den Klemmschenkeln 21, 22 an den Seitenwänden 15, 16 an. Die hierdurch im Abdeckband erzeugte Spannung führt dazu, dass der Mittelabschnitt geringfügig nach oben gebogen ist. Die Spannung bewirkt ausserdem, dass das Abdeckband von selbst in die Nut hineingezogen wird und die Abdeckschenkel 35, 36 auf die Oberseite gedrückt werden. Grössere Fertigungstoleranzen des Abdeckbandes oder der Nut führen zu grösseren oder kleineren Krümmungen des Mittelabschnittes, ohne dass die Befestigung des Abdeckbandes an der Führungsschiene und dessen Funktion beeinträchtigt ist.

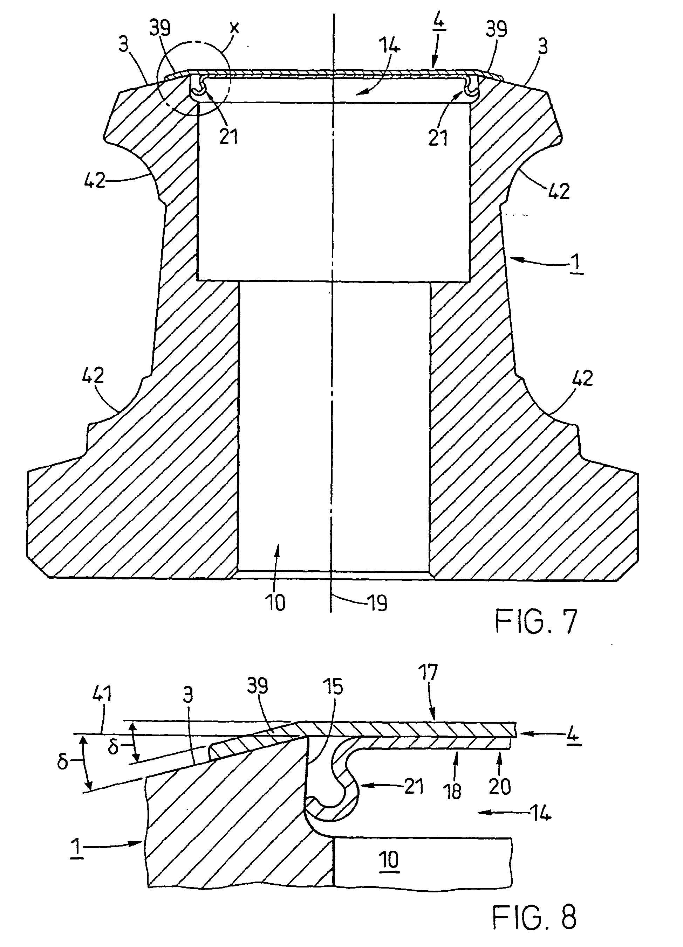

In den Fig. 7 und 8 ist ein Ausführungsbeispiel einer Schiene 1 und eines Abdeckbandes 4 einer erfindungsgemässen Linearbewegungführung gezeigt., Nachfolgend wird auch im Zusammenhang mit dieser erfindungsgemässen Ausführungsform nur auf Unterschiede zu den vorausgegangen Ausführungsformen eingegangen. Der Befestigungsstreifen 18 kann gemäss sämtlichen zuvor erörterten Ausführungsbeispielen gestaltet sein. Der dargestellte Befestigungstreifen 18 dieses Abdeckbandes entspricht im wesentlichen dem in Fig. 2 gezeigten Befestigungsstreifen 18. Im Unterschied zu diesem weist hier der Abdeckstreifen 17 zwei in Richtung auf die Schienenoberseite 3 abgekantete Schenkel 39 auf. Die Abkantwinkel δ der beiden Schenkel betragen jeweils in etwa 15°, so dass die Schenkel 39 gegenüber dem Mittelabschnitt 20 geneigt sind. Selbstverständlich können bei anderen Ausführungsbeispielen aber auch hiervon abweichende Abkantwinkel vorgesehen sein. Die sich durch die Abkantungen ergebenden Kanten des Abdeckstreifens 17 befinden sich ungefähr oberhalb der jeweiligen Seitenwand der Nut 14. Die abgekanteten Schenkel 39 liegen im wesentlichen flächig auf der Schienenoberseite 3 auf. Hierzu ist auf beiden Seiten der Nut 14 die Schienenoberseite 3 gegenüber einer orthogonal zu einer Symmetrieebene 19 verlaufenden (imaginären) Ebene 41 im wesentlichen um den gleichen Winkel δ (von ebenfalls ca. 15°) in Richtung zu den seitlich an der Schiene 1 angeordneten Laufflächen 42 für die Wälzkörper abgeschrägt. Schliesslich ist es auch möglich, dass ein einteiliges Abdeckband, wie in Fig. 6 dargestellt ist, mit den in den Fig. 7 und 8 gezeigten abgekanteten Schenkeln versehen ist und somit als Abdekkung für die in diesen beiden Figuren gezeigte Schiene vorgesehen ist.

Diese erfindungsgemässe Ausgestaltung hat den Vorteil, dass Kühlmittel von der Schienenoberseite 3 gut abfliesst und im Bereich des Abdeckbandes 4 und auf der Schienenoberseite 3 keine Kühlmittellachen entstehen. Ausserdem ist es hierdurch möglich, die Schiene 1 mit weniger Arbeitsschritten und damit effizienter zu bearbeiten als bisher. Der in der Darstellung von Fig. 7 bezüglich der Symmetrieebene 19 der Schiene jeweils links bzw. rechts liegende Teil der Schienenoberseite 3 kann nämlich zusammen mit den auf der gleichen Seite befindlichen Laufflächen 42 der Schiene mit einer einzigen entsprechend abgerichteten Schleifscheibe geschliffen werden. Ein separater Arbeitsgang für die Bearbeitung der Schienenoberseite entfällt somit.

Selbstverständlich sind auch weitere Ausgestaltungen der Klemmverbindung zwischen dem Befestigungsstreifen und den Seitenwänden der Nut möglich. Es ist ebenso denkbar, dass die beiden Klemmschenkel eines Abdeckbandes unterschiedlich gestaltete Querschnittsformen aufweisen können.

## Patentansprüche

1. Linearbewegungsführung mit einer Führungsschiene (1) und einem sich an der Führungsschiene über Roll- oder Wälzelemente abstützenden Schlitten (5), bei der die Führungsschiene mit einer sich im wesentlichen in einer Längsbewegungsrichtung erstreckenden Nut (14) und mit Durchgangsöffnungen für Schrauben zur Befestigung der Schiene versehen ist, die Linearbewegungsführung ein Abdeckmittel zur Anordnung an der Führungsschiene (1) aufweist, das zur Abdeckung der im Bereich der Nut (14) vorgesehenen Durchgangsöffnungen an der Führungsschiene fixierbar ist, wobei das Abdeckmittel als Abdeckband (4) ausgebildet ist, das einen Mittelabschnitt (20) und zwei sich daran anschliessende Klemmschenkel (21) aufweist, die gegenüber dem Mittelabschnitt (20) abgewinkelt sind, wobei das Abdeckband (4) durch Anlage der beiden Klemmschenkel an Seitenwänden (15) der Nut (14) an der Führungsschiene (1) befestigbar ist und das Abdeckband (4) mit Kantenbereichen (28) ausserhalb der Nut (14) auf einer Oberseite der Schiene (1) aufliegt, **dadurch gekennzeichnet, dass** zumindest Abschnitte einer Oberseite (3) der Führungsschiene zu seitlich an der Schiene angeordneten Laufflächen (42) für Wälzkörper hin geneigt sind.

2. Linearbewegungsführung nach Anspruch 1, **dadurch gekennzeichnet, dass** das Abdeckband (4) mit Schenkeln (39) versehen ist, die gegenüber dem Mittelabschnitt (20) des Abdeckbandes (4) geneigt sind und die Schenkel (39) zur Anlage gegen die Oberseite (3) der Schiene (1) vorgesehen sind.

3. Linearbewegungsführung nach den Anspruch 2, **dadurch gekennzeichnet, dass** die gegenüber dem Mittelabschnitt (20) geneigten Schenkel (39) an einem Abdeckstreifen (17) eines mehrteiligen Abdeckbandes (4) angeordnet sind.

4. Linearbewegungsführung nach Anspruch 2, **dadurch gekennzeichnet, dass** die Schenkel (39) zur flächigen Auflage auf der geneigten Oberseite (3) der Schiene (1) vorgesehen sind.

## Claims

1. A linear movement guide with a guide rail (1) and a slide (5), which is supported on the guide rail by means of roller or rolling elements, wherein the guide rail is provided with a groove (14) which extends essentially in a longitudinal direction of movement and with through holes for screws for fastening the rail, the linear movement guide has a covering means for arranging on the guide rail (1), which covering means can be fixed on the guide rail in order to cover the through holes provided in the region of the groove (14), wherein the covering means is configured as a covering band (4) which has a central section (20) and two clamping limbs (21) which are attached thereto and are angled with respect to the central section (20), wherein the covering band (4) can be fastened on the guide rail (1) by the two clamping limbs bearing against side walls (15) of the groove (14), and the covering band (4) rests on an upper side of the rail (1) with edge regions (28) outside the groove (14), **characterised in that** at least sections of an upper side (3) of the guide rail are inclined towards running surfaces (42) for rolling bodies, which running surfaces are arranged laterally on the rail.

2. The linear movement guide according to Claim 1, **characterised in that** the covering band (4) is provided with limbs (39) which are inclined with respect to the central section (20) of the covering band (4), and the limbs (39) are provided in order to bear against the upper side (3) of the rail (1).

3. The linear movement guide according to Claim 2, **characterised in that** the limbs (39) which are inclined with respect to the central section (20) are arranged on a covering strip (17) of a multipart covering band (4).

4. The linear movement guide according to Claim 2, **characterised in that** the limbs (39) are provided in order to bear in a planar manner on the inclined upper side (3) of the rail (1).

## Revendications

1. Guidage linéaire comportant un rail de guidage (1) et un chariot (5) s'appuyant sur le rail de guidage par l'intermédiaire d'éléments de rouleaux ou de roulements, dans lequel le rail de guidage est pourvu d'une rainure (14) s'étendant essentiellement dans une direction de mouvement longitudinale et d'ouvertures traversantes destinées à des vis en vue de la fixation du rail, le guidage linéaire présente un moyen de recouvrement à disposer sur le rail de guidage (1), qui peut être fixé afin de recouvrir les ouvertures traversantes prévues au niveau de la rainure (14) sur le rail de guidage, moyennant quoi le moyen de recouvrement est réalisé comme une bande de recouvrement (4), qui présente une section centrale (20) et deux pans de serrage (21) s'y raccordant, moyennant quoi la bande de recouvrement (4) peut être fixée en ce que les deux pans de serrage viennent en appui sur les parois latérales (15) de la rainure (14) sur le rail de guidage (1) et la bande de recouvrement (4) repose par des régions d'arêtes (28) à l'extérieur de la rainure (14) sur un côté supérieur du rail (1), **caractérisé en ce que** au moins des portions d'un côté supérieur (3) du rail de guidage sont inclinées vers des surfaces de roulement (42) destinées aux corps de roulements, disposées latéralement sur le rail.

2. Guidage linéaire selon la revendication 1,
**caractérisé en ce que** la bande de recouvrement (4) est pourvue de pans (39), qui sont inclinés par rapport à la section centrale (20) de la bande de recouvrement (4) et les pans (39) sont prévus afin de venir en appui contre le côté supérieur (3) du rail (1).

3. Guidage linéaire selon la revendication 2,
**caractérisé en ce que** les pans (39) inclinés par rapport à la section centrale (20) sont disposés sur un bandeau de recouvrement (17) d'une bande de recouvrement (4) en plusieurs parties.

4. Guidage linéaire selon la revendication 2,
**caractérisé en ce que** les pans (39) sont prévus afin de venir en appui à plat sur le côté supérieur (3) incliné du rail (1).
